# FASCICULE DE BREVET EUROPEEN

(11) **EP 3 596 351 B1**
(45) Date de publication et mention de la délivrance du brevet: **28.04.2021**
(21) Numéro de dépôt: 18712821.0
(22) Date de dépôt: 13.03.2018
(51) Int. Cl.: F16D 1/116, B64C 13/30

(54) **DISPOSITIF DE RACCORDEMENT D'UNE EXTREMITE D'UN PREMIER ARBRE A UNE EXTREMITE D'UN DEUXIEME ARBRE ET ENSEMBLE DE TRANSMISSION ASSOCIE**
VORRICHTUNG ZUM VERBINDEN EINES ENDES EINER ERSTEN WELLE MIT EINEM ENDE EINER ZWEITEN WELLE UND ZUGEHÖRIGE GETRIEBEANORDNUNG
DEVICE FOR CONNECTING AN END OF A FIRST SHAFT TO AN END OF A SECOND SHAFT, AND ASSOCIATED TRANSMISSION ASSEMBLY

(30) Priorité: 13.03.2017 FR 1752028
(43) Date de publication de la demande: 22.01.2020
(73) Titulaire: Safran Electronics & Defense, 92100 Boulogne-Billancourt (FR)
(72) Inventeur: HAUTECOEUR, Julien, 92100 Boulogne-Billancourt (FR); ROUSSELET, Mathieu, 92100 Boulogne-Billancourt (FR); PASCAL, Vincent, 92100 Boulogne-Billancourt (FR)
(74) Mandataire: Regimbeau
(86) Numéro de dépôt international: PCT/EP2018/056162
(87) Numéro de publication internationale: WO 2018/167013

(56) Documents cités:
- FR-A1- 2 858 289
- US-A- 2 448 278
- US-A- 3 992 119
- US-A1- 2010 120 545

## Description

### DOMAINE DE L'INVENTION

L'invention concerne un dispositif de raccordement d'une extrémité d'un premier arbre à une extrémité d'un deuxième arbre, et un ensemble de transmission comprenant un tel dispositif de connexion.

### ETAT DE LA TECHNIQUE

Les documents FR 2 858 289 A1 et US 3 992 119 A, par exemple, divulguent de tels dispositifs de raccordement d'une extrémité d'un premier arbre à une extrémité d'un deuxième arbre.

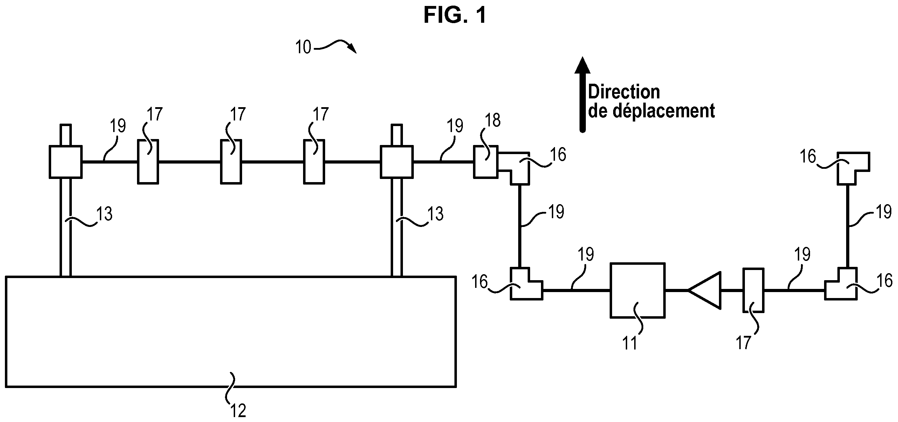

La figure 1 représente de manière schématique un exemple d'ensemble de transmission 10 pour transmettre un mouvement d'un moteur 11 à une gouverne de vol 12, tel qu'un volet hypersustentateur par exemple.

Un tel ensemble 10 permet de synchroniser de manière mécanique les gouvernes de vol entre elles. A cet effet, l'ensemble de transmission 10 raccorde le moteur 11 aux différents actionneurs 13 permettant de déplacer les gouvernes de vol.

L'ensemble de transmission 10 comprend généralement des mécanismes de réduction ou de renvoi d'angle 16, des paliers de support d'arbre 17, un limiteur de couple 18 et une pluralité d'arbres de transmission télescopiques 19 reliant les différents mécanismes entre eux.

Afin de raccorder les arbres de transmission 19 aux différents mécanismes de réduction ou de renvoi d'angle ou aux autres mécanismes, les arbres de transmission sont pourvus à leurs extrémités de dispositifs de raccordement spécifiques. Les arbres d'entrée et de sortie des mécanismes présentent des extrémités mâles cannelées propre à être engagées dans des alésages cannelés complémentaires des dispositifs de raccordement.

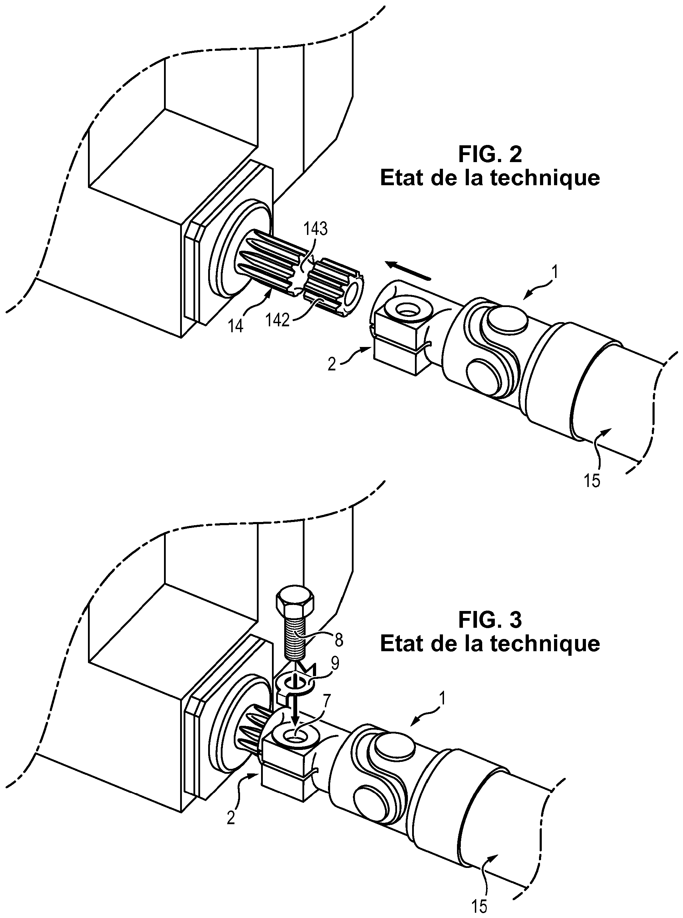

Les figures 2 et 3 illustrent des étapes de raccordement d'une extrémité d'un premier arbre 14 (arbre d'entrée ou de sortie d'un mécanisme de réduction) à une extrémité d'un deuxième arbre 15 (arbre de transmission télescopique), à l'aide d'un tel dispositif de raccordement 1.

Le premier arbre 14 présente une extrémité mâle 141 présentant des cannelures longitudinales 142 et une gorge radiale 143. Le dispositif de raccordement 1 est fixé à l'extrémité du deuxième arbre 15. Le dispositif de raccordement 1 comprend un corps 2 présentant un alésage dans lequel l'extrémité du premier arbre peut être introduite. L'alésage est pourvu de cannelures longitudinales propres à coopérer avec les cannelures longitudinales 142 de l'extrémité mâle du premier arbre 14 pour transmettre un mouvement de rotation du deuxième arbre 15 au premier arbre 14. Le corps 2 du dispositif de raccordement 1 comprend en outre un orifice taraudé 7 s'étendant transversalement à l'alésage et propre à recevoir une vis de verrouillage 8.

Comme illustré sur la figure 2, l'extrémité mâle 141 du premier arbre 14 est insérée dans l'alésage cannelé du dispositif de raccordement 1.

Puis, comme illustré sur la figure 3, le dispositif de raccordement 1 est verrouillé sur le premier arbre 14 à l'aide de la vis 8 et d'une rondelle de blocage 9. La vis 8 est visée dans l'orifice taraudée 7. L'orifice taraudé 7 est agencé de sorte que lorsque la vis 8 est vissée dans l'orifice taraudé 7, la tige de la vis 8 s'étend dans la gorge radiale 143 de l'extrémité 141 du premier arbre 14, de sorte à empêcher un retrait de l'extrémité 141 du premier arbre 14 du corps 2 dispositif de raccordement 1.

Un inconvénient d'un tel dispositif de raccordement est qu'en cas de grippage de l'un des composants de l'ensemble de transmission 10, les arbres peuvent être immobilisés dans une position dans laquelle il est difficile, voire impossible, d'accéder à la vis à l'aide d'un outil, pour pouvoir déverrouiller le dispositif de raccordement.

Dans une telle situation, il peut être nécessaire de démonter un très grand nombre de pièces du mécanisme de transmission afin d'accéder à l'équipement endommagé ou même de couper certains arbres de transmission.

### RESUME DE L'INVENTION

Un but de l'invention est de proposer un dispositif de raccordement permettant un verrouillage et un déverrouillage facilités, sans utilisation d'outil.

Ce but est atteint dans le cadre de la présente invention grâce à un dispositif de raccordement d'une extrémité d'un premier arbre à une extrémité d'un deuxième arbre, l'extrémité du premier arbre présentant une gorge radiale, le dispositif comprenant :
- un corps présentant un alésage dans lequel l'extrémité du premier arbre peut être introduite, et une lumière oblongue,
- un pion de blocage monté mobile par rapport au corps entre une position verrouillée, dans laquelle le pion fait saillie à l'intérieur de l'alésage de manière à ce que, lorsque l'extrémité du premier arbre est reçue à l'intérieur de l'alésage, le pion de blocage est engagé dans la gorge radiale de l'extrémité du premier arbre pour faire obstacle à un retrait de l'extrémité du premier arbre de l'alésage, et une position déverrouillée, dans laquelle le pion de blocage est désengagé de la gorge radiale de l'extrémité du premier arbre pour autoriser l'introduction de l'extrémité du premier arbre dans l'alésage ou le retrait de l'extrémité du premier arbre de l'alésage,
- un organe élastique de rappel propre à solliciter le pion de blocage vers la position verrouillée, et
- une pièce d'actionnement s'étendant à l'extérieur du corps et reliée au pion de blocage, la pièce d'actionnement étant propre à être sollicitée manuellement par un opérateur pour déplacer le pion de blocage de la position verrouillée à la position déverrouillée à l'encontre de l'organe élastique de rappel,
dans lequel la pièce d'actionnement comprend un coulisseau s'étendant à travers la lumière oblongue, le coulisseau étant propre à coulisser dans la lumière oblongue pour déplacer le pion de blocage entre la position verrouillée et la position déverrouillée.

Dans un tel dispositif, le pion de blocage est maintenu en position verrouillée grâce à l'organe élastique de rappel. Ainsi, le déverrouillage du pion de blocage peut être obtenu simplement en tirant le pion vers la position déverrouillée, à l'encontre de l'organe élastique de rappel. De cette manière, le verrouillage et le déverrouillage du dispositif de raccordement ne nécessite pas l'utilisation d'un outil et peut être réalisé quelle que soit la position dans laquelle les arbres sont arrêtés.

Le dispositif de raccordement proposé présente en outre l'avantage d'être adapté au raccordement d'arbres présentant des extrémités cannelées standard.

Le dispositif proposé peut en outre présenter les caractéristiques suivantes :
- le pion de blocage est monté coulissant en translation sur le corps,
- le pion de blocage présente une échancrure latérale, qui lorsque le pion de blocage est en position déverrouillée, est alignée avec l'alésage de manière à autoriser l'introduction de l'extrémité du premier arbre dans l'alésage ou le retrait de l'extrémité du premier arbre de l'alésage,
- le corps présente un orifice de guidage à l'intérieur duquel s'étend le pion de blocage et dans lequel le pion de blocage peut coulisser, l'orifice de guidage s'étendant sensiblement transversalement à l'alésage et débouchant dans l'alésage,
- l'organe élastique de rappel est un ressort, le ressort étant disposé de sorte qu'il est comprimé lorsque le pion de blocage est déplacé vers la position déverrouillée,
- le ressort s'étend à l'intérieur de l'orifice de guidage,
- le corps comprend un méplat présentant une surface plane et le coulisseau s'étend au-delà de la surface plane de manière à pouvoir être saisi manuellement par un opérateur,
- le corps comprend un méplat présentant une surface plane et la pièce d'actionnement comprend une plaquette en contact avec la surface plane, et propre à coulisser le long de la surface plane,
- la surface plane du méplat est revêtu d'une couche colorée présentant une couleur différente de celle du reste du corps, la couche colorée étant masquée par la plaquette lorsque le pion de blocage est en position verrouillée et découverte lorsque le pion de blocage est en position déverrouillée de manière à être visible par un opérateur,
- le coulisseau présente un alésage central, et comprenant une vis s'étendant à l'intérieur de l'alésage central pour fixer la pièce d'actionnement au pion de blocage,
- le pion présente un renfoncement latéral propre à recevoir une extrémité du coulisseau,
- le renfoncement présente une face s'étendant dans un plan sensiblement transversal à une direction de déplacement du pion de blocage, et l'extrémité du coulisseau présente une face disposée en contact avec la face du renfoncement pour entrainer le pion de blocage de la position verrouillée à la position déverrouillée,
- le pion de blocage s'étend en totalité à l'intérieur de l'orifice de guidage en position verrouillée.

L'invention se rapporte en outre à un ensemble de transmission pour transmettre un mouvement d'un moteur à une gouverne de vol, comprenant :
- un premier arbre ayant une extrémité présentant une gorge radiale,
- un deuxième arbre, et
- un dispositif de raccordement tel que défini précédemment, dans lequel le corps est monté solidaire d'une extrémité du deuxième arbre de transmission, pour raccorder le premier arbre de transmission au deuxième arbre de transmission.

### PRESENTATION DES DESSINS

D'autres caractéristiques ressortiront encore de la description qui suit, laquelle est purement illustrative et non limitative, et doit être lue en regard des figures annexées, parmi lesquelles :
- la figure 1 représente de manière schématique un ensemble de transmission pour transmettre un mouvement d'un moteur à une gouverne de vol,
- les figures 2 et 3 illustrent des étapes de raccordement d'une extrémité d'un premier arbre à une extrémité d'un deuxième arbre, à l'aide d'un dispositif de raccordement conforme à l'état de la technique,
- les figures 4 et 5 représentent de manière schématique un dispositif de raccordement conforme à un mode de réalisation de l'invention,
- les figures 6A et 6B représentent de manière schématique une extrémité d'un premier arbre de transmission,
- les figures 7 et 8 représentent de manière schématique des étapes de raccordement d'une extrémité du premier arbre à une extrémité d'un deuxième arbre, à l'aide du dispositif de raccordement aux figures 4 et 5,
- les figures 9 et 10 représentent de manière schématique, en coupe transversale, le dispositif de verrouillage lorsque le pion de blocage est en position verrouillée et lorsque le pion de blocage est en position déverrouillée respectivement,
- la figure 11 représente de manière schématique, en coupe transversale, le pion de blocage et la pièce d'actionnement.

### DESCRIPTION DETAILLEE D'UN MODE DE REALISATION

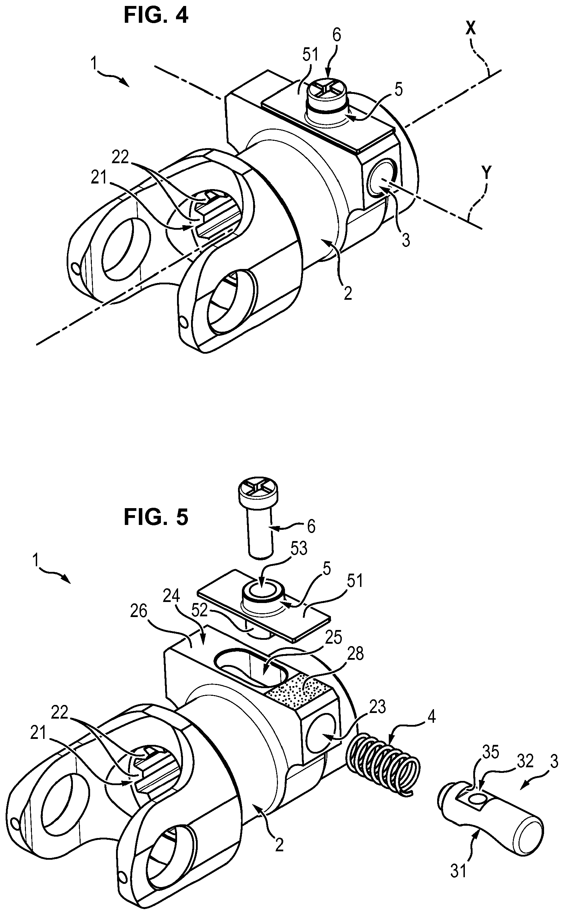

Sur les figures 4 et 5, le dispositif de raccordement 1 représenté comprend un corps 2, un pion de blocage 3, un organe élastique de rappel 4, une pièce d'actionnement 5 et une vis de fixation 6.

Le corps 2 présente un alésage 21 dans lequel l'extrémité du premier arbre peut être introduite. L'alésage 21 présente une pluralité de cannelures longitudinales 22, s'étendant suivant une direction longitudinale X, parallèle à une direction d'insertion de l'extrémité du premier arbre dans l'alésage 21.

Le corps 2 comprend en outre un orifice de guidage 23 s'étendant sensiblement transversalement à l'alésage 21 et débouchant dans l'alésage 21. L'orifice de guidage 23 s'étend selon une direction Y, orthogonale à la direction X d'insertion de l'extrémité du premier arbre dans l'alésage 21.

L'orifice de guidage 23 est propre à recevoir le pion de blocage 3.

Le corps 2 présente en outre un méplat 24 et une lumière oblongue 25. Le méplat 24 forme une surface plane 26 s'étendant parallèlement à l'axe Y de l'orifice de guidage 23. La lumière oblongue 25 est formée à travers la surface plane 26 et débouche dans l'orifice de guidage 23. La lumière oblongue 25 présente une forme allongée selon une direction parallèle à l'axe Y de l'orifice de guidage 23.

L'organe élastique de rappel 4 et le pion de blocage 3 s'étendent à l'intérieur de l'orifice de guidage 23.

Le pion de blocage 3 est apte à coulisser à l'intérieur de l'orifice de guidage 23 selon une direction de coulissement parallèle à l'axe Y de l'orifice de guidage 23.

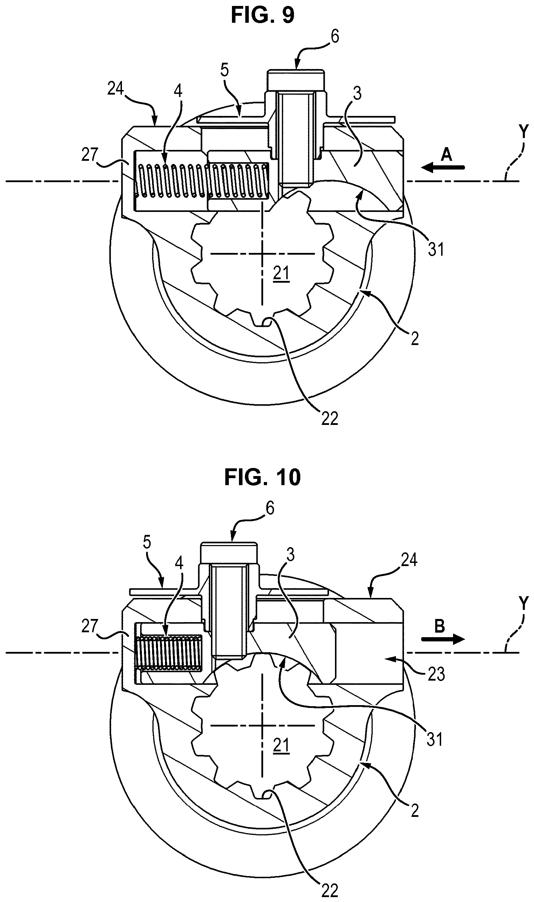

Plus précisément, le pion de blocage 3 est monté coulissant en translation à l'intérieur de l'orifice de guidage 23 entre une position verrouillée (illustrée schématiquement sur la figure 9) et une position déverrouillée (illustrée schématiquement sur la figure 10).

Comme visible sur les figures 9 et 10, aussi bien en position verrouillée qu'en position déverrouillée, le pion de blocage 3 s'étend en totalité à l'intérieur de l'orifice de guidage 23.

Le pion de blocage 3 présente une échancrure latérale 31. L'échancrure latérale 31 forme un renfoncement dans le pion 3, le renfoncement ayant une surface cylindrique de révolution présentant un rayon sensiblement égal au rayon de l'alésage 21 du corps 2.

Lorsque le pion de blocage 3 est dans la position verrouillée (figure 9), l'échancrure 31 est décalée par rapport à l'alésage 21 et le pion de blocage 3 fait saillie à l'intérieur de l'alésage 21. Ainsi, lorsque l'extrémité du premier arbre est reçue à l'intérieur de l'alésage 21, le pion de blocage 3 est engagé dans la gorge radiale de l'extrémité du premier arbre pour faire obstacle à un retrait de l'extrémité du premier arbre de l'alésage.

Lorsque le pion de blocage 3 est dans la position déverrouillée (figure 10), l'échancrure 31 est alignée avec l'alésage 21 de manière à autoriser l'introduction de l'extrémité du premier arbre dans l'alésage 21 ou le retrait de l'extrémité du premier arbre de l'alésage 21.

L'organe élastique de rappel 4 est agencé de manière à exercer sur le pion de blocage 3 une force de rappel tendant à ramener le pion 3 dans la position verrouillée. L'organe élastique de rappel 4 est un ressort, par exemple un ressort hélicoïdal. L'organe élastique de rappel 4 est agencé entre une paroi de fonds 27 de l'orifice 23 et le pion de blocage 3. De préférence, l'organe élastique de rappel 4 est disposé de sorte qu'il est comprimé lorsque le pion de blocage 3 est déplacé vers la position déverrouillée.

La pièce d'actionnement 5 est propre à être sollicitée manuellement par un opérateur pour déplacer le pion de blocage 3 de la position verrouillée à la position déverrouillée à l'encontre de l'organe élastique de rappel 4.

Comme illustré sur les figures 4 et 5, la pièce d'actionnement 5 comprend une plaquette 51 et un coulisseau 52.

La pièce d'actionnement 5 s'étend en partie à l'extérieur du corps 2 et en partie à l'intérieur de l'orifice de guidage 23.

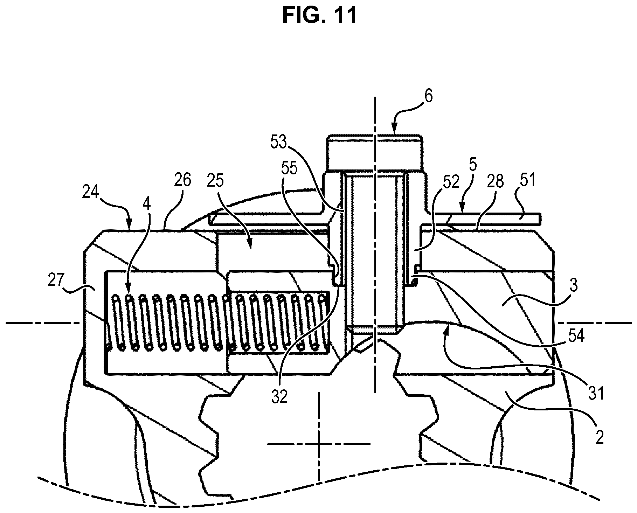

Comme illustré sur la figure 11, la pièce d'actionnement 5 est fixée au pion de blocage 3 via la vis de fixation 6.

Plus précisément, le coulisseau 52 s'étend à travers la lumière oblongue 25. Le coulisseau 52 s'étend au-delà de la surface plane 26 de manière à pouvoir être saisi manuellement par un opérateur. Le coulisseau 52 est propre à coulisser dans la lumière oblongue 25 pour déplacer le pion de blocage 3 entre la position verrouillée et la position déverrouillée.

Le coulisseau 52 présente un alésage central 53, la vis de fixation 6 s'étendant à l'intérieur de l'alésage central 53 pour fixer la pièce d'actionnement 5 au pion de blocage 3.

Par ailleurs, le pion de blocage 3 présente un renfoncement latéral 32 propre à recevoir une extrémité 54 du coulisseau 52. Le renfoncement latéral 32 présente une face 35 s'étendant dans un plan sensiblement transversal à la direction Y de coulissement du pion de blocage 3, et l'extrémité 54 du coulisseau présente une face 55 disposée en contact avec la face 35 du renfoncement pour entrainer le pion de blocage 3 de la position verrouillée à la position déverrouillée.

La plaquette 51 est disposée en contact avec la surface plane 26 du méplat 24 et est propre à coulisser le long de la surface plane 26. La surface plane 26 du méplat est revêtue d'une couche colorée 28 présentant une couleur différente de celle du reste du corps 2. Lorsque le pion de blocage 3 est en position verrouillée, la couche colorée 28 est masquée par la plaquette 51. Lorsque le pion de blocage 3 est en position déverrouillée, la couche colorée 28 est découverte de manière à être visible par un opérateur. De cette manière, l'opérateur peut s'assurer que le pion de blocage 3 est en position verrouillée.

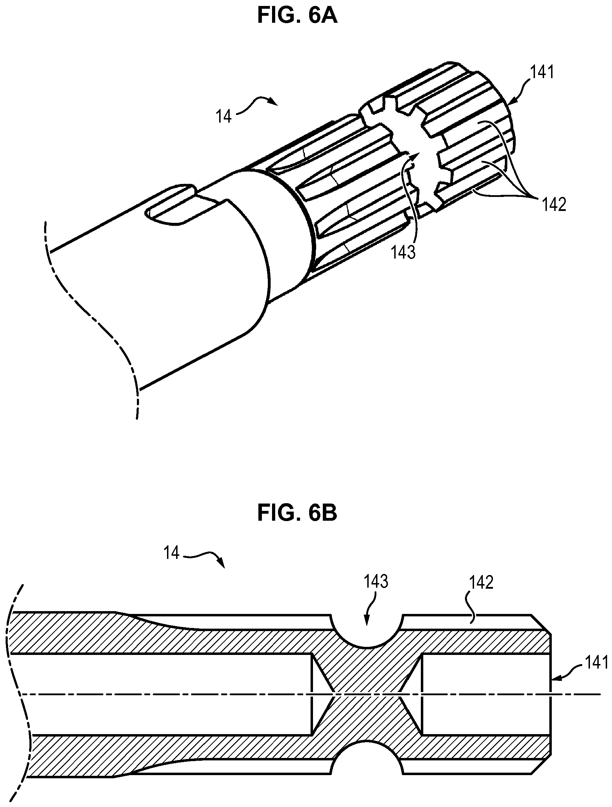

Les figures 6A et 6B représentent de manière schématique une extrémité 141 du premier arbre 14.

Comme illustré sur ces figures, l'extrémité 141 du premier arbre de 14 comprend une pluralité de cannelures longitudinales 142 s'étendant parallèlement à une direction longitudinale de l'arbre 14, et une gorge radiale 143 s'étendant transversalement aux cannelures 142, sur la circonférence de l'arbre 14.

Lorsque l'extrémité 141 du premier arbre 14 est insérée dans l'alésage 21 du corps 2 du dispositif de raccordement 1, les cannelures 142 de l'extrémité 141 du premier arbre 14 viennent s'intercaler avec les cannelures 22 de l'alésage 21 du corps 2 du dispositif de raccordement 1. De cette manière, l'extrémité 141 du premier arbre 14 est solidarisée en rotation avec le corps 2 du dispositif de raccordement 1. En outre, la gorge radiale 143 est propre à recevoir le pion de blocage 3 pour verrouiller l'extrémité 141 du premier arbre 14 à l'intérieur du corps 2.

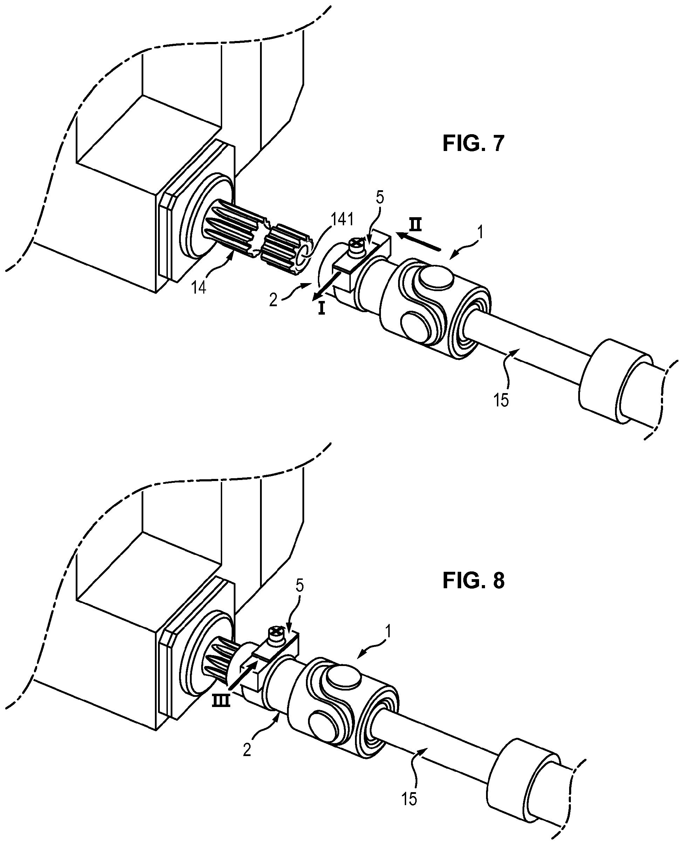

Les figures 7 et 8 représentent de manière schématique des étapes de raccordement de l'extrémité 141 du premier arbre 14 à une extrémité d'un deuxième arbre 15. Le premier arbre 14 est par exemple un arbre de transmission et le deuxième arbre est par exemple un arbre d'entrée ou de sortie d'un mécanisme ou d'un équipement, tel qu'un mécanisme de réduction 16 faisant partie d'un ensemble de transmission 10 conforme à la figure 1.

Sur les figures 7 et 8, dispositif de raccordement 1 est fixée à l'une des extrémités du deuxième arbre 15.

Selon une première étape I illustrée sur la figure 7, le pion de blocage 3 est déplacé de la position verrouillée à la position déverrouillée. A cet effet, l'opérateur saisit la pièce d'actionnement 5 et déplace la pièce d'actionnement 5 par rapport au corps 2, ce qui entraine un déplacement du pion de blocage 3 à l'intérieur de l'orifice de guidage 23 de la position verrouillée à la position déverrouillée (flèche A sur la figure 9). Le déplacement du pion de blocage 3 de la position verrouillée à la position déverrouillée à l'encontre de l'organe élastique de rappel 4 a pour effet de comprimer l'organe élastique de rappel 4.

Selon une deuxième étape II, tandis que l'opérateur maintient le pion de blocage 3 en position déverrouillée, il insère l'extrémité 141 du premier arbre 14 est insérée dans l'alésage 21 du corps 2 du dispositif de raccordement 1.

Selon une troisième étape III illustrée sur la figure 8, le pion de blocage 3 est déplacé de la position déverrouillée à la position verrouillée. A cet effet, l'opérateur relâche la pièce d'actionnement 5 de sorte que l'organe élastique de rappel 4 ramène le pion de blocage 3 de la position déverrouillée à la position verrouillée (flèche B sur la figure 10). Le déplacement du pion de blocage 3 de la position déverrouillée à la position verrouillée a pour effet de détendre l'organe élastique de rappel 4.

Une fois en position verrouillée, le pion de blocage 3 est engagé dans la gorge radiale 143 de l'extrémité du premier arbre. Dans cette position, le pion de blocage 3 fait obstacle à un retrait de l'extrémité 141 du premier arbre 14 hors de l'alésage 21. De plus, l'organe élastique de rappel 4 maintient le pion de blocage 3 dans la position verrouillée.

Pour désolidariser le premier arbre 14 du deuxième arbre 15, il suffit à l'opérateur de réaliser les étapes inverses. L'opérateur saisit manuellement la pièce d'actionnement 5 et la déplace à nouveau par rapport au corps 2 dans le sens de la flèche A, de manière à faire coulisser le pion de blocage 3 à l'intérieur de l'orifice de guidage 23 de la position verrouillée à la position déverrouillée. Tandis que l'opérateur maintient le pion de blocage 3 en position déverrouillée, il retire l'extrémité 141 du premier arbre 14 de l'alésage 21. Puis, l'opérateur relâche la pièce d'actionnement 5 de sorte que l'organe élastique de rappel 4 ramène le pion de blocage 3 de la position déverrouillée à la position verrouillée.

Ainsi, le démontage du premier arbre 14 peut être réalisé facilement, quelle que soit la position du premier arbre 14, et ne nécessite pas d'outil.

## Revendications

1. Dispositif de raccordement (1) d'une extrémité (141) d'un premier arbre (14) à une extrémité d'un deuxième arbre (15), l'extrémité (141) du premier arbre (14) présentant une gorge radiale (143), le dispositif comprenant :
- un corps (2) présentant un alésage (21) dans lequel l'extrémité (141) du premier arbre (14) peut être introduite,
- un pion de blocage (3) monté mobile par rapport au corps (2) entre une position verrouillée, dans laquelle le pion (3) fait saillie à l'intérieur de l'alésage (21) de manière à ce que, lorsque l'extrémité (141) du premier arbre (14) est reçue à l'intérieur de l'alésage (21), le pion de blocage (3) est engagé dans la gorge radiale (143) de l'extrémité (141) du premier arbre (14) pour faire obstacle à un retrait de l'extrémité (141) du premier arbre (14) de l'alésage (21), et une position déverrouillée, dans laquelle le pion de blocage (3) est désengagé de la gorge radiale (143) de l'extrémité (141) du premier arbre (14) pour autoriser l'introduction de l'extrémité (141) du premier arbre (14) dans l'alésage (21) ou le retrait de l'extrémité (141) du premier arbre (14) de l'alésage (21),
- un organe élastique de rappel (4) propre à solliciter le pion de blocage (3) vers la position verrouillée, et
- une pièce d'actionnement (5) s'étendant à l'extérieur du corps (2) et reliée au pion de blocage (3), la pièce d'actionnement (5) étant propre à être sollicitée manuellement par un opérateur pour déplacer le pion de blocage (3) de la position verrouillée à la position déverrouillée à l'encontre de l'organe élastique de rappel (4),
**caractérisé en ce que** le corps (2) comprend une lumière oblongue (25) et la pièce d'actionnement comprend un coulisseau (52) s'étendant à travers la lumière oblongue (25), le coulisseau (52) étant propre à coulisser dans la lumière oblongue (25) pour déplacer le pion de blocage (3) entre la position verrouillée et la position déverrouillée.

2. Dispositif selon la revendication 1, dans lequel le pion de blocage (3) est monté coulissant en translation sur le corps (2).

3. Dispositif selon l'une des revendications 1 et 2, dans lequel le pion de blocage (3) présente une échancrure latérale (31), qui lorsque le pion de blocage (3) est en position déverrouillée, est alignée avec l'alésage (21) de manière à autoriser l'introduction de l'extrémité (141) du premier arbre (14) dans l'alésage (21) ou le retrait de l'extrémité (141) du premier arbre de l'alésage (21).

4. Dispositif selon l'une des revendications 1 à 3, dans lequel le corps (2) présente un orifice de guidage (23) à l'intérieur duquel s'étend le pion de blocage (3) et dans lequel le pion de blocage (3) peut coulisser, l'orifice de guidage (23) s'étendant sensiblement transversalement à l'alésage (21) et débouchant dans l'alésage (21).

5. Dispositif selon l'une des revendications 1 à 4, dans lequel l'organe élastique de rappel (4) est un ressort, le ressort étant disposé de sorte qu'il est comprimé lorsque le pion de blocage (3) est déplacé vers la position déverrouillée.

6. Dispositif selon les revendications 4 et 5, dans lequel le ressort s'étend à l'intérieur de l'orifice de guidage (23).

7. Dispositif selon l'une des revendications 1 à 6, dans lequel le corps (2) comprend un méplat (24) présentant une surface plane (26) et le coulisseau (52) s'étend au-delà de la surface plane (26) de manière à pouvoir être saisi manuellement par un opérateur.

8. Dispositif selon l'une des revendications 1 à 7, dans lequel le corps (2) comprend un méplat (24) présentant une surface plane (26) et la pièce d'actionnement (5) comprend une plaquette (51) en contact avec la surface plane (26), et propre à coulisser le long de la surface plane (26).

9. Dispositif selon la revendication 8, dans lequel la surface plane (26) du méplat (25) est revêtue d'une couche colorée (28) présentant une couleur différente de celle du reste du corps (2), la couche colorée (28) étant masquée par la plaquette (51) lorsque le pion de blocage (3) est en position verrouillée et découverte lorsque le pion de blocage (3) est en position déverrouillée de manière à être visible par un opérateur.

10. Dispositif selon l'une des revendications 1 à 9, dans lequel le coulisseau (52) présente un alésage central (53), et comprenant une vis (6) s'étendant à l'intérieur de l'alésage central (53) pour fixer la pièce d'actionnement (5) au pion de blocage (3).

11. Dispositif selon l'une des revendications 1 à 10, dans lequel le pion de blocage (3) présente un renfoncement latéral (32) propre à recevoir une extrémité (54) du coulisseau (52).

12. Dispositif selon la revendication 11, dans lequel le renfoncement latéral (32) présente une face (35) s'étendant dans un plan sensiblement transversal à une direction de déplacement du pion de blocage (3), et l'extrémité (54) du coulisseau (52) présente une face (55) disposée en contact avec la face (35) du renfoncement (32) pour entrainer le pion de blocage (3) de la position verrouillée à la position déverrouillée.

13. Dispositif selon l'une des revendications 1 à 12, dans lequel le pion de blocage (3) s'étend en totalité à l'intérieur de l'orifice de guidage (23) en position verrouillée.

14. Ensemble de transmission (10) pour transmettre un mouvement d'un moteur (11) à une gouverne de vol (12), comprenant :
- un premier arbre (14) ayant une extrémité (141) présentant une gorge radiale (143),
- un deuxième arbre (15), et
- un dispositif de raccordement (1) conforme à l'une des revendications 1 à 13, dans lequel le corps (2) est monté solidaire d'une extrémité du deuxième arbre (15), pour raccorder le premier arbre (14) au deuxième arbre (15).

## Patentansprüche

1. Vorrichtung zum Verbinden (1) eines Endes (141) einer ersten Welle (14) mit einem Ende einer zweiten Welle (15), wobei das Ende (141) der ersten Welle (14) eine radiale Nut (143) aufweist, wobei die Vorrichtung umfasst:
- einen Körper (2), der eine Bohrung (21) aufweist, in welche das Ende (141) der ersten Welle (14) einführbar ist,
- einen Blockierstift (3), der in Bezug auf den Körper (2) zwischen einer verriegelten Position, in welcher der Stift (3) in das Innere der Bohrung (21) derart hervorsteht, dass, wenn das Ende (141) der ersten Welle (14) im Inneren der Bohrung (21) aufgenommen ist, der Blockierstift (3) in die radiale Nut (143) des Endes (141) der ersten Welle (14) eingeführt ist, um einen Rückzug des Endes (141) der ersten Welle (14) aus der Bohrung (21) zu behindern, und einer entriegelten Position, in welcher der Blockierstift (3) von der radialen Nut (143) des Endes (141) der ersten Welle (14) gelöst ist, um das Einführen des Endes (141) der ersten Welle (14) in die Bohrung (21) oder den Rückzug des Endes (141) der ersten Welle (14) aus der Bohrung (21) zu erlauben, bewegbar angebracht ist,
- ein elastisches Rückstellorgan (4), das imstande ist, den Blockierstift (3) in die verriegelte Position zu beanspruchen, und
- ein Betätigungsteil (5), das sich außerhalb des Körpers (2) erstreckt und mit dem Blockierstift (3) verbunden ist, wobei das Betätigungsteil (5) imstande ist, von einem Bediener manuell beansprucht zu werden, um den Blockierstift (3) gegen das elastische Rückstellorgan (4) aus der verriegelten Position in die entriegelte Position zu verlagern,
**dadurch gekennzeichnet, dass** der Körper (2) eine längliche Öffnung (25) umfasst und das Betätigungsteil einen Schieber (52) umfasst, der sich durch die längliche Öffnung (25) erstreckt, wobei der Schieber (52) imstande ist, in der länglichen Öffnung (25) zu gleiten, um den Blockierstift (3) zwischen der verriegelten Position und der entriegelten Position zu verlagern.

2. Vorrichtung nach Anspruch 1, wobei der Blockierstift (3) auf dem Körper (2) translatorisch gleitend angebracht ist.

3. Vorrichtung nach einem der Ansprüche 1 und 2, wobei der Blockierstift (3) eine seitliche Aussparung (31) aufweist, die, wenn der Blockierstift (3) in entriegelter Position ist, mit der Bohrung (21) derart fluchtet, um das Einführen des Endes (141) der ersten Welle (14) in die Bohrung (21) oder den Rückzug des Endes (141) der ersten Welle aus der Bohrung (21) zu gestatten.

4. Vorrichtung nach einem der Ansprüche 1 bis 3, wobei der Körper (2) eine Führungsöffnung (23) aufweist, in deren Inneren sich der Blockierstift (3) erstreckt und in der der Blockierstift (3) gleiten kann, wobei sich die Führungsöffnung (23) etwa quer zur Bohrung (21) erstreckt und in der Bohrung (21) ausmündet.

5. Vorrichtung nach einem der Ansprüche 1 bis 4, wobei das elastische Rückstellorgan (4) eine Feder ist, wobei die Feder derart angeordnet ist, dass sie komprimiert wird, wenn der Blockierstift (3) in die entriegelte Position verlagert wird.

6. Vorrichtung nach den Ansprüchen 4 und 5, wobei sich die Feder im Inneren der Führungsöffnung (23) erstreckt.

7. Vorrichtung nach einem der Ansprüche 1 bis 6, wobei der Körper (2) eine Abflachung (24) umfasst, die eine ebene Oberfläche (26) aufweist und sich der Schieber (52) jenseits der ebenen Oberfläche (26) derart erstreckt, dass er von einem Bediener manuell ergreifbar ist.

8. Vorrichtung nach einem der Ansprüche 1 bis 7, wobei der Körper (2) eine Abflachung (24) aufweist, die eine ebene Oberfläche (26) aufweist und das Betätigungsteil (5) eine Platte (51) umfasst, die im Kontakt mit der ebenen Oberfläche (26) ist und imstande, entlang der ebenen Oberfläche (26) zu gleiten.

9. Vorrichtung nach Anspruch 8, wobei die ebene Oberfläche (26) der Abflachung (25) mit einer farbigen Schicht (28) beschichtet ist, die eine Farbe aufweist, die sich von der des Rests des Körpers (2) unterscheidet, wobei die farbige Schicht (28) durch die Platte (51) verdeckt ist, wenn der Blockierstift (3) in verriegelter Position ist und unbedeckt, wenn der Blockierstift (3) in entriegelter Position ist, so dass sie von einem Bediener zu sehen ist.

10. Vorrichtung nach einem der Ansprüche 1 bis 9, wobei der Schieber (52) eine zentrale Bohrung (53) aufweist und eine Schraube (6) umfasst, die sich im Inneren der zentralen Bohrung (53) erstreckt, um das Betätigungsteil (5) am Blockierstift (3) zu befestigen.

11. Vorrichtung nach einem der Ansprüche 1 bis 10, wobei der Blockierstift (3) eine seitliche Vertiefung (32) aufweist, die imstande ist, ein Ende (54) des Schiebers (52) aufzunehmen.

12. Vorrichtung nach Anspruch 11, wobei die seitliche Vertiefung (32) eine Fläche (35) aufweist, die sich in einer Ebene erstreckt, die zu einer Verlagerungsrichtung des Blockierstifts (3) etwa transversal ist, und das Ende (54) des Schiebers (52) eine Fläche (55) aufweist, die im Kontakt mit der Fläche (35) der Vertiefung (32) angeordnet ist, um den Blockierstift (3) aus der verriegelten Position in die entriegelte Position anzutreiben.

13. Vorrichtung nach einem der Ansprüche 1 bis 12, wobei sich der Blockierstift (3) insgesamt im Inneren der Führungsöffnung (23) in verriegelter Position erstreckt.

14. Übertragungseinheit (10) zur Übertragung einer Bewegung eines Motors (11) auf ein Flugruder (12), umfassend:
- eine erste Welle (14) mit einem Ende (141), das eine radiale Nut (143) aufweist,
- eine zweite Welle (15), und
- eine Verbindungsvorrichtung (1) nach einem der Ansprüche 1 bis 13, wobei der Körper (2) mit einem Ende der zweiten Welle (15) fest verbunden angebracht ist, um die erste Welle (14) mit der zweiten Welle (15) zu verbinden.

## Claims

1. A device (1) for connecting one end (141) of a first shaft (14) to one end of a second shaft (15), the end (141) of the first shaft (14) having a radial groove (143), the device comprising:
- a body (2) having a bore (21) in which the end (141) of the first shaft (14) can be introduced,
- a blocking pin (3) movably mounted relative to the body (2) between a locked position, in which the pin (3) protrudes inside the bore (21) so that, when the end (141) of the first shaft (14) is received inside the bore (21), the blocking pin (3) is engaged in the radial groove (143) of the end (141) of the first shaft (14) to prevent removal of the end (141) of the first shaft (14) from the bore (21), and an unlocked position, in which the blocking pin (3) is disengaged from the radial groove (143) of the end (141) of the first shaft (14) to allow introduction of the end (141) of the first shaft (14) into the bore (21) or removal of the end (141) of the first shaft (14) from the bore (21),
- an elastic return member (4) adapted to urge the blocking pin (3) toward the locked position, and
- an actuating part (5) extending outside the body (2) and connected to the blocking pin (3), the actuating part (5) being adapted to be manually urged by an operator for moving the blocking pin (3) from the locked position to the unlocked position against the elastic return member (4),
**characterized in that** the body (2) comprises an oblong opening (25), and the actuating part comprises a slider (52) extending through the oblong opening (25), the slider (52) being adapted to slide in the oblong opening (25) for moving the blocking pin (3) between the locked position and the unlocked position.

2. The device according to claim 1, wherein the blocking pin (3) is slidably mounted in translation on the body (2).

3. The device according to any of claims 1 and 2, wherein the blocking pin (3) has a lateral notch (31) which, when the blocking pin (3) is in the unlocked position, is aligned with the bore (21) so as to allow introduction of the end (141) of the first shaft (14) into the bore (21) or removal of the end (141) of the first shaft from the bore (21).

4. The device according to any of claims 1 to 3, wherein the body (2) has a guide orifice (23) inside which the blocking pin (3) extends and in which the blocking pin (3) can slide, the guide orifice (23) extending substantially transversely to the bore (21) and opening into the bore (21).

5. The device according to any of claims 1 to 4, wherein the elastic return member (4) is a spring, the spring being disposed so that it is compressed when the blocking pin (3) is moved toward the unlocked position.

6. The device according to claims 4 and 5, wherein the spring extends inside the guide orifice (23).

7. The device according to any of claims 1 to 6, wherein the body (2) comprises a flattened portion (24) having a flat surface (26) and the slider (52) extends beyond the flat surface (26) so that it can be manually grasped by an operator.

8. The device according to any of claims 1 to 7, wherein the body (2) comprises a flattened portion (24) having a flat surface (26) and the actuating part (5) comprises a plate (51) in contact with the flat surface (26), and adapted to slide along the flat surface (26) .

9. The device according to claim 8, wherein the flat surface (26) of the flattened portion (25) is coated with a colored layer (28) having a different color from that of the rest of the body (2), the colored layer (28) being masked by the plate (51) when the blocking pin (3) is in the locked position and uncovered when the blocking pin (3) is in the unlocked position so as to be visible to an operator.

10. The device according to any of claims 1 to 9, wherein the slider (52) has a central bore (53), and comprising a screw (6) extending inside the central bore (53) to fasten the actuating part (5) to the blocking pin (3).

11. The device according to any of claims 1 to 10, wherein the blocking pin (3) has a lateral recess (32) adapted to receive one end (54) of the slider (52).

12. The device according to claim 11, wherein the lateral recess (32) has a face (35) extending in a plane substantially transverse to a direction of displacement of the blocking pin (3), and the end (54) of the slider (52) has a face (55) disposed in contact with the face (35) of the recess (32) for driving the blocking pin (3) from the locked position to the unlocked position.

13. The device according to any of claims 1 to 12, wherein the blocking pin (3) extends entirely inside the guide orifice (23) in the locked position.

14. A transmission assembly (10) for transmitting a movement of a motor (11) to a flight control surface (12), comprising:
- a first shaft (14) having one end (141) with a radial groove (143),
- a second shaft (15), and
- a connection device (1) according to any of claims 1 to 13, in which the body (2) is mounted secured to one end of the second shaft (15), for connecting the first shaft (14) to the second shaft (15) .
